**Europäisches Patentamt**

**European Patent Office**

**Office européen des brevets**

(19)

(11) **EP 1 329 878 A1**

(12) **EUROPEAN PATENT APPLICATION**
published in accordance with Art. 158(3) EPC

(43) Date of publication:
**23.07.2003 Bulletin 2003/30**

(21) Application number: **01967839.0**

(22) Date of filing: **25.09.2001**

(51) Int Cl.7: **G11B 7/00**, G11B 7/013, G11B 7/24

(86) International application number:
**PCT/JP01/08326**

(87) International publication number:
**WO 02/029787 (11.04.2002 Gazette 2002/15)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **29.09.2000 JP 2000300055**

(71) Applicant: **MATSUSHITA ELECTRIC INDUSTRIAL CO., LTD.**
**Kadoma-shi, Osaka 571-8501 (JP)**

(72) Inventors:
• **UNO, Mayumi**
  **Sennan-gun, Osaka 598-0093 (JP)**
• **YAMADA, Noboru**
  **Hirakata-shi, Osaka 573-1104 (JP)**

(74) Representative: **Balsters, Robert et al**
**Novagraaf International S.A.**
**25, avenue du Pailly**
**1220 Les Avanchets - Geneva (CH)**

(54) **OPTICAL INFORMATION RECORDING MEDIUM AND METHOD OF REPRODUCING THE RECORD**

(57) An optical information recording medium includes a first substrate; a second substrate; and a recording layer formed between the first substrate and the second substrate. The optical information recording medium includes lands and grooves, and a distance between a light source of laser light irradiating the optical information recording medium and the lands is larger than a distance between the light source and the grooves. A difference D between the distance from the light source of the laser light to the lands and the distance from the light source of the laser light to the grooves is in the range of $0 < D < \lambda/(4N)$ (N is a refractive index of the substrate), where $\lambda$ is the wavelength of the laser light. The grooves are formed in the optical information recording medium at a pitch of less than or equal to 0.40 $\mu$m.

*FIG.1*

- 2 2nd substrate
- d₂
- 8 Reflective layer
- 7 Protective layer
- 6 Interface layer
- 5 Recording layer
- 4 Interface layer
- 3 Protective layer
- 1 1st substrate

100

Laser light

EP 1 329 878 A1

**Description**

TECHNICAL FIELD

The present invention relates to an optical information recording medium for allowing information to be recorded thereon, erased and reproduced therefrom and rewritten thereon at a high density and a high speed using optical means such as laser irradiation or like; a method for performing information recording, erasing and reproduction using the optical information recording medium; and an apparatus for performing information recording on, erasing from and reproduction from the optical information recording medium.

BACKGROUND ART

Optical information recording media such as magneto-optic recording media, phase-change recording media and the like are known as large capacity media for allowing information to be recorded and rewritten thereon at a high density. For performing recording, these optical recording media utilize a change in an optical characteristic of a recording material, generated by locally irradiating the recording material with laser light.

These optical information recording media, which have great advantages of allowing random access when necessary and having satisfactory portability, have recently become more important. They are in greater demand in various fields, for example, for recording and storing individual data, video information or the like obtained using a computer; for use in medical and academic fields; as recording media for portable digital video recorders; or as a substitute for home-use video tape recorders. Due to the attainment of improved performance in applications and image information, there is a corresponding need for such optical information recording media to have a larger capacity (a higher density) and to operate at a higher speed.

Here, the historical background of optical information recording and reproduction media will be described. When optical information recording and reproduction media first appeared, a system of recording data in only lands or grooves of the optical information recording and reproduction media was adopted. Since the optical information recording and reproduction media were not required to be conformed to the large capacity, high speed recording of today, the recording density thereof was quite low. Accordingly, whether to record data in lands or grooves was arbitrarily selectable and did not substantially matter. Along with the times, however, larger capacity, higher speed recording has been demanded, to which the system of recording data only in lands or grooves cannot sufficiently respond. In order to solve the problem, a land/groove system of recording data both in lands and grooves was developed. According to the land/groove system, theoretically, a recording density twice as high as the recording density of the initially used land system or groove system can be achieved with a disc having the same pitch (a pitch is a sum of the width of a land and the width of a groove). Again theoretically, as the pitch is reduced in the land/groove system, the recording density can be improved relatively easily. In actuality, however, as the pitch is reduced to some extent in the land/ groove system, the laser light directed to the land or groove of the recording medium in order to record data may have a thermally or optically adverse effect on a mark, which is already recorded in an area adjacent to the area to which another mark is to be recorded. Referred to as "adjacent erasing", this is a serious problem which needs to be solved in the field of high density recording media.

As described above, when the recording density is increased, it becomes very difficult to stably record data by the land/groove system.

In order to prevent adjacent erasing while keeping the recording density as high as that of the land/groove system, it is necessary to reduce the pitch to half that of the land/groove system and record data by the land system or the groove system. Since the pitch is extremely small in this case, it is indispensable to reduce the wavelength of the laser light used for recording or to increase the numerical aperture for the laser light. A shorter wavelength of the laser light and a corresponding smaller diameter of the minimum spot of the laser light allow recording of a smaller mark, which raises the recording density on a recording face of the recording medium. However, when the recording density is extremely high, signal writing and rewriting become unstable. Further, when a very small mark is repetitively recorded at a high density, another problem occurs that signal quality is likely to deteriorate after the repetitive recording. The reason for such deterioration is as follows. After a mark is repetitively recorded, the substances of the recording material undergo slight migration at the recording face. When reproducing a signal having an extremely small amplitude, even such slight migration of the substances has a relatively large effect on signal quality. Accordingly, in the case where a very small mark is repetitively recorded at a high density, it is observed that signal quality deteriorates in a shorter time period after such repetitive recording.

Japanese Laid-Open Publication No. 11-195243 discloses a technique for performing recording on and reproduction from a multi-layer optical disc using an optical system having a high numerical aperture for realizing a higher capacity. This technique reduces a thickness of a transparent substrate to obtain a disc skew margin with certainty.

However, Japanese Laid-Open Publication No. 11-195243 does not disclose any technique for solving the problem of adjacent erasing, caused when high density recording is performed using short-wavelength light, or using an optical system having a high numerical aperture. The publication does not disclose any technique for achieving, at the same time, reduction in adjacent erasing, a high C/N ratio, and a high repetitive-recording characteristic. The publication provides no indication as to which recording system (land system, groove system, etc.) is superior for solving the above-described problems.

Japanese Laid-Open Publication No. 11-120565 discloses a technique for performing information recording and reproduction using a thin substrate and an optical system having a high numerical aperture. According to this technique, it is determined whether information is recorded in either only lands or only grooves or in both the lands and the grooves, in accordance with the relationship between the spot diameter and the width of the track, so as to realize compatibility in terms of light of different wavelengths or optical systems of different numerical apertures. The publication describes that even if the standards for recording and reproduction are updated, this technique still allows information to be recorded and reproduced with either the pre-update or post-update standards. According to this publication, when the sum of the land width and the groove width is equal to or greater than twice the spot diameter, information is recorded in both the lands and the grooves.

However, Japanese Laid-Open Publication No. 11-120565 does not describe the problems of adjacent erasing and deterioration in the repetitive-recording characteristic, which are caused when high density recording is performed using an optical system having a high numerical aperture or using short-wavelength light. The technique disclosed in this publication determines the recording system merely in accordance with the relationship between the spot diameter and the track width.

Japanese Laid-Open Publication No. 5-128589 discloses a technique for determining whether information is to be recorded in grooves or lands in accordance with the polarity of the phase of the recording medium which changes before and after the recording.

However, Japanese Laid-Open Publication No. 5-128589 does not describe the problem of adjacent erasing, which is caused when high density recording is performed. The technique disclosed in this publication determines whether information is to be recorded in the lands or the grooves merely in accordance with the polarity of the phase difference. The publication does not describe which is more effective for reducing the adjacent erasing or for improving the repetitive-recording characteristic.

As described above, theoretically working techniques for reducing the size of recording marks so as to allow high density recording have conventionally been developed. However, no practically usable technique has been established for obtaining a sufficient signal amplitude without causing adjacent erasing.

When an optical system having a high numerical aperture or short-wavelength laser light is used for achieving high density recording, it is necessary to further reduce the distance between adjacent tracks, i.e., a track pitch. However, the reduction in track pitch causes the above-described serious problem of adjacent erasing. Namely, when a signal is written, a mark which is already written in an adjacent track is thermally or optically influenced and erased. An optical information recording medium which causes adjacent erasing cannot be provided as a practical recording medium for high density recording even if it theoretically allows recording with a smaller optical spot.

In order to solve this problem, it is conceivable to keep the distance between adjacent tracks relatively large so as to increase the recording density in the direction of the tracks. However, such a technique causes a different problem of reducing the signal amplitude of the recording marks and thus preventing a sufficient C/N ratio from being obtained. In order to raise the recording density, it is conceivable to increase the linear density in the direction of the tracks and record very small marks. However, such a technique is likely to undesirably deteriorate signal quality after repetitive recording.

The present invention has been made in light of the above-described problems and has an objective of providing an optical information recording medium which provides, at the same time, a sufficient C/N ratio, a high repetitive-recording characteristic, and reduction in adjacent erasing even when high density recording is performed.

DISCLOSURE OF THE INVENTION

The present invention provides an optical information recording medium including a first substrate; a second substrate; and a recording layer formed between the first substrate and the second substrate. The optical information recording medium includes lands and grooves, and a distance between a light source of laser light irradiating the optical information recording medium and the lands is larger than a distance between the light source and the grooves. A difference D between the distance from the light source of the laser light to the lands and the distance from the light source of the laser light to the grooves is in the range of $0 < D < \lambda/(4N)$ (N is a refractive index of the substrate), where $\lambda$ is the wavelength of the laser light. The grooves are formed in the optical information recording medium at a pitch of less than or equal to 0.40 $\mu$m. Each groove is either in a first state having a first reflectance or in a second state having a second reflectance lower than the first reflectance, and the first state and the second state are reversibly changeable by the irradiation of the laser light. When a groove is irradiated with laser light for reproduction, $\phi_1 - \phi_2$,

which is a difference between $\phi_1$ and $\phi_2$, fulfills $2n\pi - \pi < \phi_1 - \phi_2 < 2n\pi$ (n is an arbitrary integer) where $\phi_1$ is a phase of light reflected by a portion of the groove which is in the first state and $\phi_2$ is a phase of light reflected by a portion of the groove which is in the second state. Thus, adjacent erasing caused by writing can be reduced and a sufficient C/N ratio can be obtained even when the track pitch is extremely small. Therefore, an optical information recording medium allowing higher density recording can be provided.

In one embodiment of the invention, when a groove is irradiated with the laser light for reproduction, $\phi_1 - \phi_2$, which is a difference between $\phi_1$ and $\phi_2$, fulfills $2n\pi - \pi < \phi_1 - \phi_2 < 2n\pi - 0.1\pi$ (n is an arbitrary integer) where $\phi_1$ is a phase of light reflected by a portion of the groove which is in the first state and $\phi_2$ is a phase of light reflected by a portion of the groove which is in the second state. Thus, a more preferable optical information recording medium can be provided.

In one embodiment of the invention, when a groove is irradiated with the laser light for reproduction, $\phi_1 - \phi_2$, which is a difference between $\phi_1$ and $\phi_2$, fulfills $2n\pi - 0.5\pi < \phi_1 - \phi_2 < 2n\pi - 0.1\pi$ (n is an arbitrary integer) where $\phi_1$ is a phase of light reflected by a portion of the groove which is in the first state and $\phi_2$ is a phase of light reflected by a portion of the groove which is in the second state. Thus, a still more preferable optical information recording medium can be provided.

In one embodiment of the invention, the first substrate has a thickness of greater than or equal to 0.01 mm and less than or equal to 0.4 mm, and the second substrate has a thickness of greater than or equal to 0.4 mm. Thus, satisfactory signal recording can be performed without being influenced by the tilt or non-uniformity in the thickness of each substrate.

In one embodiment of the invention, the recording layer has a thickness greater than or equal to 3 nm and less than or equal to 20 nm. Thus, restriction of heat diffusion in the surface of the recording layer can be achieved, such restriction providing the effect of reducing adjacent erasing more noticeably.

In one embodiment of the invention, the optical information recording medium further includes a guide groove for the laser light in a surface of at least one of the first substrate and the second substrate facing the recording layer, and the guide groove has a depth $d_2$ fulfilling $\lambda/20n_1 \leq d_2 \leq \lambda/8n_1$, where $\lambda$ is a wavelength of the laser light and $n_1$ is a refractive index of the substrate on which the laser light is incident first. Thus, reduction in adjacent erasing and an increase in signal amplitude can both be provided. Therefore, a problem of the conventional art, i.e., deterioration in adjacent erasing when the groove or land depth is relatively small can be eliminated.

In one embodiment of the invention, the recording layer includes at least one of Sb, Te and Se. Thus, a difference between states of different optical characteristics can be increased, which provides higher recording density.

In one embodiment of the invention, at least two recording layers are included. Thus, information can be written in two or more recording layers, which can increase the capacity of the recording medium.

In one embodiment of the invention, the guide grooves are formed at a pitch of less than or equal to 0.40 $\mu$m. Thus, high recording density is possible, which improves the capacity of the recording medium.

In one embodiment of the invention, the optical information recording medium fulfills $Tp/4 < w < Tp/2$ where w is a width of a recording mark formed on the grooves by the irradiation of the laser light and Tp is the pitch of the grooves. Thus, reduction in adjacent erasing and increase in the signal amplitude can both be provided easily.

In one embodiment of the invention, the optical information recording medium fulfills $0.50\,Tp \leq Gw \leq 0.85\,Tp$ where Tp is the pitch and Gw is a width of the grooves. Thus, servo control is stabilized and hence a large signal amplitude can be obtained.

The present invention provides a method for recording information on, and erasing and reproducing information from an optical information recording medium comprising a first substrate; a second substrate; and a recording layer formed between the first substrate and the second substrate. The optical information recording medium includes lands and grooves, and a distance between a light source of laser light irradiating the optical information recording medium and the lands is larger than a distance between the light source and the grooves. A difference D between the distance from the light source of the laser light to the lands and the distance from the light source of the laser light to the grooves is in the range of $0 < D < \lambda/(4N)$ (N is a refractive index of the substrate), where $\lambda$ is the wavelength of the laser light. The grooves are formed in the optical information recording medium at a pitch of less than or equal to 0.40 $\mu$m. Each groove is either in a first state having a first reflectance or in a second state having a second reflectance lower than the first reflectance, and the first state and the second state are reversibly changeable by the irradiation of the laser light. When a groove is irradiated with laser light for reproduction, $\phi_1 - \phi_2$, which is a difference between $\phi_1$ and $\phi_2$, fulfills $2n\pi - \pi < \phi_1 - \phi_2 < 2n\pi$ (n is an arbitrary integer) where $\phi_1$ is a phase of light reflected by a portion of the groove which is in the first state and $\phi_2$ is a phase of light reflected by a portion of the groove which is in a second state. The method includes the steps of modulating a power level of the laser light between $P_1$ and $P_2$ to record the information in the groove or erase the information from the groove; and irradiating the groove with laser light for reproduction having a power level of $P_3$ to reproduce information recorded in the groove. $P_1$ is a power level of the laser light which can change the groove from the second state to the first state by the irradiation of the laser light, $P_2$ is a power level of the laser light which can change the groove from the first state to the second state by the irradiation of the laser light, and $P_3$ is power level of the laser light which does not change the reflectance of the groove but provides a sufficient amount of reflected light for reproducing the recorded information by the irradiation of the laser light, $P_3$ being lower than $P_1$ and $P_2$. Thus, adjacent erasing caused by writing can be reduced and a sufficient C/N ratio can be obtained even when the track pitch is extremely small. Therefore, a method for recording data on, erasing data from and reproducing data from an optical information recording medium allowing higher density recording can be provided.

In one embodiment of the invention, the first substrate has a thickness of less than or equal to 0.4 mm, the second substrate has a thickness of greater than or equal to 0.4 mm, and the laser light is obtained by a numerical aperture of greater than or equal to 0.70. Thus, a method for recording data on, erasing data from, and reproducing data from an optical information recording medium allowing higher density recording can be provided.

In one embodiment of the invention, the laser light has a wavelength of less than or equal to 450 nm. Thus, a smaller mark can be recorded. Therefore, a method for recording data on, erasing data from, and reproducing data from an optical information recording medium allowing higher density recording can be provided.

The present invention provides an apparatus for recording information on, and erasing and reproducing information from an optical information recording medium. The apparatus includes a light source for emitting laser light; an optical system for collecting the laser light emitted by the laser light source on the optical information recording medium; and a laser light control section for controlling the laser light source. The optical information recording medium includes a first substrate; a second substrate; and a recording layer formed between the first substrate and the second substrate. The optical information recording medium includes lands and grooves, and a distance between a light source of laser light irradiating the optical information recording medium and the lands is larger than a distance between the light source and the grooves. A difference D between the distance from the light source of the laser light to the lands and the distance from the light source of the laser light to the grooves is in the range of $0 < D < \lambda/(4N)$ (N is a refractive index of the substrate), where $\lambda$ is the wavelength of the laser light. The grooves are formed in the optical information recording medium at a pitch of less than or equal to 0.40 $\mu$m. Each groove is either in a first state having a first reflectance or in a second state having a second reflectance lower than the first reflectance, and the first state and the second state are reversibly changeable by the irradiation of the laser light. When a groove is irradiated with laser light for reproduction, $\phi_1 - \phi_2$, which is a difference between $\phi_1$ and $\phi_2$, fulfills $2n\pi - \pi < \phi_1 - \phi_2 < 2n\pi$ (n is an arbitrary integer) where $\phi_1$ is a phase of light reflected by a portion of the groove which is in the first state and $\phi_2$ is a phase of light reflected by a portion of the groove which is in a second state. For recording or erasing the information, the laser control section controls the laser light source so as to modulate a power level of the laser light collected on the optical information recording medium by the optical system between $P_1$ and $P_2$. For reproducing the information, the laser control section controls the laser light source so that a power level of the laser light collected on the optical information recording medium by the optical system is $P_3$. $P_1$ is a power level of the laser light which can change the groove from the second state to the first state by the irradiation of the laser light, $P_2$ is a power level of the laser light which can change the groove from the first state to the second state by the irradiation of the laser light, and $P_3$ is power level of the laser light which does not change the reflectance of the groove but provides a sufficient amount of reflected light for reproducing the recorded information by the irradiation of the laser light, $P_3$ being lower than $P_1$ and $P_2$. Thus, adjacent erasing can be reduced and a sufficient C/N ratio can be obtained even when the track pitch is extremely small. Therefore, a method for recording data on, erasing data from and reproducing data from an optical information recording medium allowing higher density recording can be provided.

In one embodiment of the invention, the first substrate has a thickness of less than or equal to 0.4 mm, the second substrate has a thickness of greater than or equal to 0.4 mm, and the laser light is obtained by a numerical aperture of greater than or equal to 0.70. Thus, a method for recording data on, erasing data from, and reproducing data from an optical information recording medium allowing higher density recording can be provided.

In one embodiment of the invention, the laser light has a wavelength of less than or equal to 450 nm. Thus, a smaller mark can be recorded. Therefore, a method for recording data on, erasing data from, and reproducing data from an optical information recording medium allowing higher density recording can be provided.

BRIEF DESCRIPTION OF THE DRAWINGS

Figure **1** shows an example of a layer structure of an optical information recording medium according to the present invention.

Figure **2** shows differences between a conventional recording system and a recording system according to the present invention.

Figure **3** shows an example of a layer structure of an optical information recording medium according to the present invention.

Figure **4** is a schematic view of a layer formation apparatus used for producing an optical information recording medium according to the present invention.

Figure **5** is a schematic view of a recording and reproduction apparatus for an optical information recording medium according to the present invention.

BEST MODE FOR CARRYING OUT THE INVENTION

Hereinafter, embodiments of the present invention will be described with reference to the drawings.

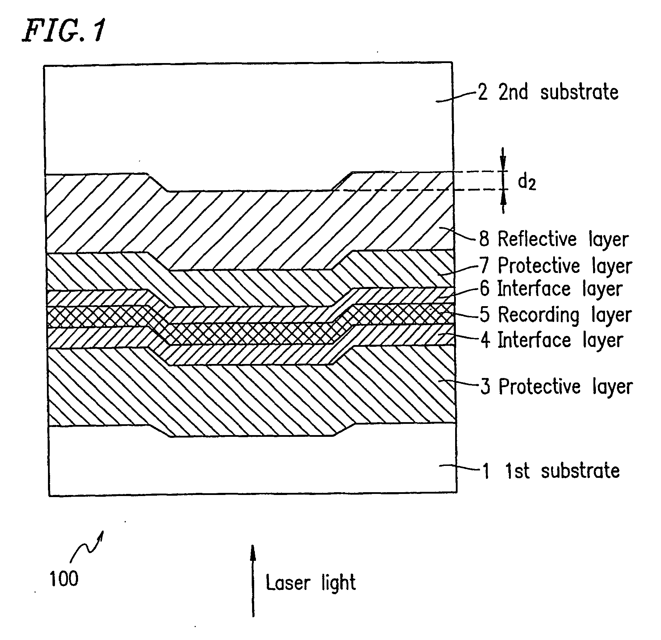

Figure **1** shows an example of a layer structure **100** of an optical information recording medium according to the present invention. The optical information recording medium includes a first substrate **1**, a second substrate **2**, and a recording layer **5** formed between the first substrate **1** and the second substrate **2.** The first substrate **1** and the second substrate **2** act as protective members for protecting an optical information recording medium from damage or oxidation. The first substrate **1** preferably has a thickness of equal to or greater than 0.01 mm and equal to or less than 0.4 mm. When the first substrate **1** is relatively thick, it is difficult to perform satisfactory signal recording due to the influence of the tilt and the non-uniformity in the thickness of the first substrate **1** when laser light which has passed through an optical system having a high numerical aperture value is used in order to raise the recording density. Conventionally, an optical system having a numerical aperture value of about 0.60 is generally used for laser light. Considering that laser light, which has passed through an optical system having a higher numerical aperture value, for example, having a numerical aperture value of equal to or greater than 0.70, is used, it is preferable that the first substrate **1** has a thickness of equal to or less than 0.4 mm. When the first substrate **1** is too thin, however, the first substrate **1** cannot act as a protective material for protecting the optical information recording medium from damage or oxidation. Accordingly, it is preferable that the thickness of the first substrate **1** is equal to or greater than 0.01 mm.

The second substrate **2** preferably has a thickness of equal to or greater than 0.4 mm. The second substrate **2** is not provided on the side which receives incident laser light after it has passed through an optical system having a high numerical aperture. Therefore, unlike the first substrate **1**, there is no need to provide an upper limit on the thickness of the second substrate **2**. However, it is required that the second substrate **2** has sufficient strength to form a proper layer structure of the optical information recording medium. In order to achieve this purpose, the thickness of the second substrate **2** is required to be equal to or greater than 0.4 mm. As described above, there is no specific upper limit on the thickness of the second substrate **2**. In order to provide a medium which has a sufficient strength, is not too heavy, and has satisfactory portability, the thickness of the second substrate **2** is preferably equal to or greater than 0.4 mm and formed so as to be equal to or less than 1.2 mm.

The optical information recording medium may include protective layers **3** and **7** for protecting the recording layer **5**, interface layers **4** and **6** provided between the recording layer **5** and the protective layers **3** and **7**, and a reflective layer **8** provided between the second substrate **2** and the protective layer **7**. The second substrate **2** may have a guide groove for guiding laser light formed in a surface of the recording layer **5**. The guide groove may be formed in either the first substrate **1** or the second substrate **2**. The guide groove may be formed in both the first substrate **1** and the second substrate **2**. For example, an optical information recording medium can be produced by forming a guide groove in the second substrate **2**, forming a layer structure of the optical information recording medium on the second substrate **2**, and then bringing a sheet-like substrate and the second substrate **2** together with an ultraviolet-curable resin or the like. In this case, the first substrate **1** is formed of the sheet-like substrate and the ultraviolet-curable resin. A two-layer optical information recording medium having two recording layers can be produced by forming a guide groove in each of the first substrate **1** and the second substrate **2,** forming a layer structure of the optical information recording medium on each substrate, and then bringing the first substrate **1** and the second substrate **2** together so that the layer structures face each other.

The guide groove preferably has a depth $d_2$ of $0 < d_2 < \lambda/(4n_1)$, and more preferably has a depth $d_2$ of $\lambda/(20n_1) \leq d_2 \leq \lambda/(8n_1)$ where $\lambda$ is the wavelength of the laser light and $n_1$ is the refractive index of the first substrate. In general, as the groove depth $d_2$ becomes less than $\lambda/(4n_1)$, the amount of reflected light obtained increases and thus the signal amplitude can be increased. However, under such conditions, the likelihood of inter-track thermal interference increases, which results in adjacent erasing occurring. According to the present invention, adjacent erasing can be reduced. Therefore, it is possible to make the groove depth relatively smaller so as to increase the signal amplitude. For this purpose, the groove depth is preferably equal to or less than $\lambda/(8n_1)$. When the groove depth is too small, however, it becomes difficult to perform proper tracking. In the case where a push-pull tracking method is used, a tracking error signal obtained is maximum when the groove depth is $\lambda/(8n_1)$ and is minimum when the groove depth is 0 or $\lambda/(4n_1)$. The reason why the tracking error signal is minimum when the groove depth is $\lambda/(4n_1)$ is that the amount of reflected light is reduced at this point. In an experiment performed by the present inventors, a tracking error signal having a sufficiently large amplitude to allow stable tracking was obtained when the guide groove had a depth of equal to or greater than $\lambda/(20n_1)$ and equal to or less than $\lambda/(8n_1)$. Therefore, the depth of the guide groove is preferably in the range of equal to or greater than $\lambda/(20n_1)$ and equal to or less than $\lambda/(8n_1)$.

Examples of materials used for the first substrate **1** and the second substrate **2** include polycarbonate, polymethylmethacrylate, polyolefin resins, and glass. The substrate, which is on the side which receives incident laser light when seen from the recording layer **5,** i.e., the first substrate in Figure **1**, is preferably formed of a material that is transparent to the laser light or else only absorbs a negligibly small amount of the light (for example, equal to or less than 10%). This is because when the laser light is absorbed by the substrate, the effective amount of the laser light which can be used is reduced. Such reduction is disadvantageous for an increase in the signal amplitude when recording and reproducing.

According to the present invention, at least the first substrate 1 is provided on the side which receives incident laser light. Therefore, the first substrate 1 is preferably formed of a material which is transparent to the laser light or absorbs a negligibly small amount of the laser light.

For the first substrate **1,** a substrate produced in advance so as to have a prescribed shape by molding or the like may be used, or a sheet-like substrate may be processed into a prescribed shape. When an ultraviolet-curable resin is used for the first substrate **1**, the ultraviolet-curable resin should only be transparent to the laser light used for recording and reproduction, and the thickness thereof should only be in the above-described range. Here, the first substrate 1 refers to the entire transparent layer provided on the side which receives incident laser light when seen from the protective layer (described below). For example, when a transparent sheet-like substrate and the layer structure are brought together with a transparent ultraviolet-curable resin, the first substrate **1** refers to the entirety of the transparent sheet-like substrate and the transparent ultraviolet-curable resin.

The protective layers **3** and **7** are provided mainly for the purpose of protecting the recording material and adjusting the optical characteristics of the medium so that the light can be effectively absorbed by the recording layer. Usable materials for the protective layers 3 and 7 include, for example, sulfides such as ZnS and the like; selenides such as ZnSe and the like; oxides such as Si-O, Al-O, Ti-O, Ta-O, Zr-O and the like; nitrides such as Ge-N, Cr-N, Si-N, Al-N, Nb-N, Mo-N, Ti-N, Zr-N, Ta-N and the like; nitrides-oxides such as Ge-O-N, Cr-O-N, Si-O-N, Al-O-N, Nb-O-N, Mo-O-N, Ti-O-N, Zr-O-N, Ta-O-N and the like; carbides such as Ge-C, Cr-C, Si-C, Al-C, Ti-C, Zr-C, Ta-C and the like; fluorides such as Si-F, Al-F, Ca-F and the like; derivatives thereof; and any combination thereof (for example, $ZnS\text{-}SiO_2$).

The interface layers **4** and **6** have a function of preventing the recording layer **5** from being oxidized, corroded, deformed or the like and of preventing atoms which form the protective layers **3** and **7,** for example, S or O atoms, from being diffused into the recording layer **5**. Such diffusion prevention results in an improvement in the repetitive-recording characteristic and further promotes crystallization of the recording layer **5**. The interface layers **4** and **6** may be provided on either one of faces of the recording layer **5**, but are preferably provided on both of the faces of the recording layer **5**, in order to fully utilize the above-described functions of the interface layers **4** and **6**. Such provision on both faces is especially preferred under conditions which do not easily allow the recording layer **5** to be crystallized, for example, when the thickness of the recording layer **5** is relatively small.

The interface layers **4** and **6** may be formed of a material providing the above-described functions. Specifically, usable exemplary materials include, as a main component, nitrides such as Ge-N, Ge-Si-N, Ge-Cr-N, Ge-Mn-N, Cr-N, Si-N, Al-N, Nb-N, Mo-N, Ti-N, Zr-N, Ta-N and the like; nitrides-oxides such as Ge-O-N, Cr-O-N, Si-O-N, Al-O-N, Nb-O-N, Mo-O-N, Ti-O-N, Zr-O-N, Ta-O-N and the like; oxides such as Si-O, Al-O, Ti-O, Ta-O, Zr-O, and the like; carbides such as Ge-C, Cr-C, Si-C, Al-C, Ti-C, Zr-C, Ta-C and the like; fluorides such as Si-F, Al-F, Ca-F and the like; derivatives thereof; and any combination thereof. Especially, use of a nitride or a nitride-oxide as a main component is preferable since such a material generally realizes formation of a fine, dense layer, and thus noticeably provides the above-described effects.

The recording layer **5** is formed of a material, optical characteristics of which can be reversibly changed. Especially, use of a phase changeable material including at least one of Sb, Te or Se is preferable since such a material provides a great difference in the optical characteristics. Usable exemplary materials include, as a main component, Te-Sb-Ge, Te-Sb-Ge-N, Te-Sb-In, Te-Sb-In-Ag, Te-Sb-Sn-Ge, Te-Sb-Zn-Ge, Te-Sn-Sb, Te-Sb-Au-Ge, In-Sb-Se, and In-Te-Se.

The thickness of the recording layer **5** is preferably equal to or greater than 3 nm and equal to or less than 20 nm. In the case where the thickness is less than 3 nm, the recording material cannot be easily formed into a layer, and therefore it is difficult to obtain satisfactory rewriting characteristics. When the thickness is equal to or greater than 3 nm, the recording material can be crystallized and thus satisfactory rewriting characteristics can be obtained. In the case where the thickness is greater than 20 nm, the thermal diffusion on the recording layer is excessive, and thus adjacent erasing is more likely to occur when high density recording is performed. A thickness of equal to or greater than 3 nm and equal to or less than 20 nm is preferable since such a thickness provides a further advantage of a preferable phase difference range as according to the present invention described below is fulfilled.

Reversible changes of the optical characteristics of the recording layer **5** include a reversible change of the recording layer **5** between a high reflectance state and a low reflectance state. When recording is performed using a reflectance difference as an optical characteristic, a large reflectance difference is obtained according to the present invention, and therefore a large signal amplitude is easily obtained. When recording is performed using a reflectance difference as an optical characteristic, an added advantage of easy compatibility with a ROM disc is obtained.

The reflective layer **8** is provided in order to provide heat release and also optical effects such as, for example, effective light absorption by the recording layer **5**. The reflective layer **8** is formed of a metal such as, for example, Au, Ag, Cu, Al, Ni, Cr, or Ti; or an alloy including an appropriately selected metal such as, for example, Ag-Pd-Cu, Ag-Ca, Al-Cr, Al-Ti, or Al-Ta. When the reflective layer **8** is provided, a preferable thickness thereof is equal to or greater than 1 nm. When the thickness of the reflective layer **8** is less than 1 nm, it is difficult to form a uniform layer, and as a result, thermal and optical effects are decreased.

Laser light for performing information recording, erasing and reproduction is incident on the first substrate **1**. Due to such a structure, even when laser light which has passed through an optical system having a high numerical aperture can be used, the influence of the tilt or the non-uniformity in the thickness of the substrate with respect to the laser light which is directed to the recording layer 5 is reduced.

According to the present invention, information recording and erasing is performed by irradiating only the grooves, amongst the lands and grooves formed in the optical information recording medium, so as to form a recording mark on the grooves.

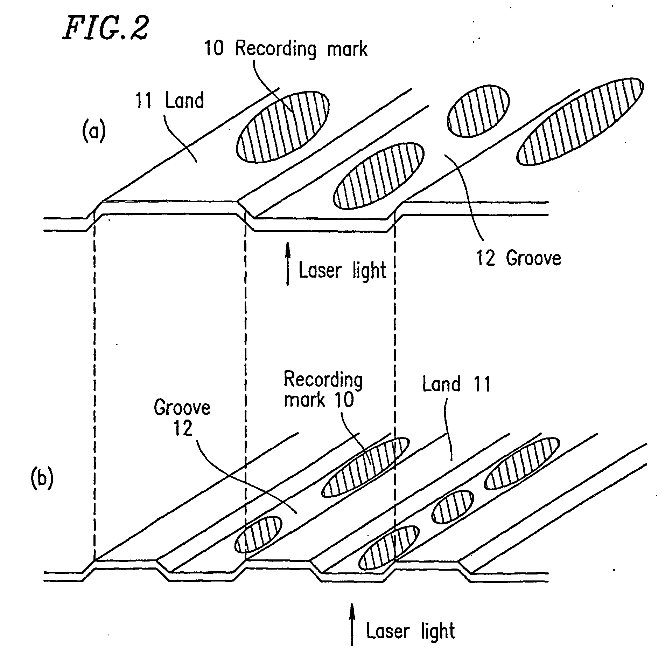

An optical information recording medium includes concave portions and convex portions. Portions which are convexed when seen from the laser light incident side are referred to as lands, and portions which are concaved when seen from the laser light incident side are referred to as grooves. The distance between the light source of the laser light irradiating the optical information recording medium, and the lands, is larger than the distance between the light source and the grooves. The grooves are formed in the optical information recording medium at a pitch of equal to or less than 0.40 μm. A sum of the width of a land and the width of a groove is referred to as a track pitch. Hereinafter, recording to or erasing from the lands and grooves will be described in detail with reference to Figure **2**.

Figure 2 shows differences between a conventional recording system and a recording system according to the present invention. One technique to achieve high density recording is to, as shown in Figure **2(a)**, write recording marks **10** in both of lands **11** and grooves **12**. However, such land/groove recording causes the problem of adjacent erasing to occur. That is, when a new mark is recorded, an adjacent mark which is already written is adversely influenced thermally or optically and erased. This occurs because heat conduction is easily caused through the recording layer **5** and the like since there is almost no physical distance between the lands **11** and the grooves **12.**

In Figure **2(b),** the track pitch is half that shown in Figure **2(a),** and recording marks **10** are written in only the lands **11** or the grooves **12**. In this manner, the problem of adjacent erasing is significantly alleviated, while still obtaining a recording density similar to that of Figure **2(a).** This is due to the provision of a certain distance between the recording marks preventing thermal interference between the adjacent marks.

Land recording and groove recording were compared and the following results were obtained. Regarding reduction in adjacent erasing, groove recording exhibited a satisfactory effect, although the effect was slightly inferior to that of land recording. Regarding the repetitive recording characteristic, groove recording exhibited a better result than that of land recording. As can be appreciated, the studies of the present inventors demonstrated that groove recording provides both reduction in adjacent erasing and an excellent repetitive recording characteristic. A conceivable reason is as follows. In the lands and in the grooves, heat is diffused along walls thereof in different manners. Heat is diffused at a slightly higher speed when recording is performed in the grooves than when recording is performed in the lands. As a result, the thermal load after repetitive recording is slightly smaller when recording is performed in the grooves than when recording is performed in the lands. However, no detailed mechanism has been clarified.

The decision of whether to perform recording only in the lands or only in the grooves can be determined in accordance with the conditions required of the medium. For example, when it is required both to reduce adjacent erasing and maintain a high repetitive-recording characteristic even after a great number of repetitions, recording can be performed in the grooves. When such a high repetitive-recording characteristic is not especially required but a very high level of reduction in adjacent erasing is required, recording can be performed in the lands.

The present inventors newly found that (i) the problem of adjacent erasing is a significant problem when recording is performed both in the lands and the grooves where the track pitch is equal to or less than 0.40 μm, and (ii) even in such a case, the problem of adjacent erasing is significantly alleviated while maintaining the high repetitive-recording characteristic by performing recording only in the grooves. It was found that the present invention is especially effective when the numerical aperture value for the laser light is high (for example, equal to or greater than 0.70) and the track pitch is equal to or less than 0.33 μm.

As described above, when recording is performed only in the grooves, the problem of adjacent erasing as occurring in the case of land/groove recording is solved. However, in general, groove recording is slightly disadvantageous to obtain a high C/N ratio. This is because when recording is performed only in the grooves at the same density as that for land/groove recording, the track pitch is half that required for land/groove recording. Consequently, the width of the recording marks cannot be increased due to encountering the track walls.

In order to solve this problem, the present invention provides the following condition when a groove is irradiated with laser light for reproduction. $\phi_1$ is the phase of the light reflected by a portion of the groove which is in a first state (for example, in an amorphous state having a low reflectance) and $\phi_2$ is the phase of the light reflected by a portion of the groove which is in a second state (for example, in a crystalline state having a high reflectance). A difference between the two phases, i.e., $\phi_1 - \phi_2$, fulfills $2n\pi - \pi < \phi_1 - \phi_2 < 2n\pi$ (n is an arbitrary integer). In order to fulfill the aforementioned condition, an optical information recording medium needs to be designed so that the optical constants and/or thickness of the recording layer and the protective layers are appropriate. As the interface layers are very thin and do not have any substantial influence on the optical state, the thickness of the interface layers need not be considered for designing an optical information recording medium. The difference between the two phases, i.e., $\phi_1 - \phi_2$, is preferably in the range of $2n\pi - \pi < \phi_1 - \phi_2 < 2n\pi - 0.1\pi$ (n is an arbitrary integer), and more preferably in the range of $2n\pi - 0.5\pi < \phi_1 - \phi_2 < 2n\pi - 0.1\pi$ (n is an arbitrary integer).

By fulfilling the above-described condition, it becomes possible to increase the signal amplitude by the interference of the phase difference between a groove having a recording mark written therein and an adjacent land, even when information is recorded only in the groove. As a result, a high C/N ratio can be obtained. The basis for this will be described using a simple model as an example.

First, an amplitude of a reflectance obtained when a land and a groove are each scanned by laser light for reproduction is found.

Parameters while the land is scanned with the laser light are given as follows. $R_{H1}$ is an amount of reflected light from only the land when the land is in a high reflectance state. $R_{L1}$ is an amount of reflected light from only the land when the land is in a low reflectance state. $R_{H2}$ is a sum of amounts of reflected light from two grooves adjacent to the land, regardless of the state of the land. Parameters while the groove is scanned with the laser light are given as follows. $R_{H1}$ is an amount of reflected light from only the groove when the groove is in a high reflectance state. $R_{L1}$ is an amount of reflected light from only the groove when the groove is in a low reflectance state. $R_{H2}$ is a sum of amounts of reflected light from two lands adjacent to the groove, regardless of the state of the groove.

Here, it is assumed that the land and the groove are formed so that the amounts reflected therefrom are almost equal to each other (the land and the groove are formed to have an almost equal width) for the sake of simplicity.

$R_{LH}$ is the total amount of reflected light when a portion of the land irradiated with the laser light is in a high reflectance state, and $R_{LL}$ is the total amount of reflected light when the portion of the land irradiated with the laser light is in a low reflectance state. In consideration of the delay in the phase using the groove as the basis of the phase difference.

$$R_{LH} = R_{H1}\exp(-2\pi i \cdot 2dn_1/\lambda)\cdot\exp(i\Delta\phi) + R_{H2}\exp(i\Delta\phi)$$

$$R_{LL} = R_{L1}\exp(-2\pi i \cdot 2dn_1/\lambda) + R_{H2}\exp(i\Delta\phi)$$

Similarly, where $R_{GH}$ is the total amount of reflected light when a portion of the groove irradiated with the laser light is in a high reflectance state, and $R_{GL}$ is the total amount of reflected light when the portion of the groove irradiated with the laser light is in a low reflectance state,

$$R_{GH} = R_{H1}\exp(i\Delta\phi) + R_{H2}\exp(-2\pi i \cdot 2dn_1/\lambda)\cdot\exp(i\Delta\phi)$$

$$R_{GL} = R_{L1} + R_{H2}\exp(-2\pi i \cdot 2dn_1/\lambda)\cdot\exp(i\Delta\phi)$$

Accordingly, a reproduction signal amplitude $C_L$ from the land is:

$$C_L \propto |R_{LH}|^2 - |R_{LL}|^2$$

$$= |R_{H1}\exp(iA) + R_{H2}|^2 - |R_{L1}\exp(iA) + R_{H2}\exp(i\Delta\phi)|^2$$

$$= (R_{H1}^2 - R_{L1}^2) + 2R_{H2}(R_{H1}\cos A - R_{L1}\cos(A - \Delta\phi))$$

(where $A = -2\pi \cdot 2dn_1/\lambda$).

Similarly, a reproduction signal amplitude $C_G$ from the groove is:

$$C_G \propto |R_{GH}|^2 - |R_{GL}|^2$$

$$= (R_{H1}^2 - R_{L1}^2) + 2R_{H2}(R_{H1}\cos A - R_{L1}\cos(A + \Delta\phi))$$

Accordingly, the difference between $C_L$ and $C_G$, i.e., $C_L - C_G$ is:

$$C_L - C_G = 2R_{H2}R_{L1}\{\cos(A + \Delta\phi) - \cos(A - \Delta\phi)\}$$
$$= -4R_{H2}R_{L1} \cdot \sin A \cdot \sin\Delta\phi$$

In order that the reproduction signal amplitude from the groove is larger than the reproduction signal amplitude from the land, i.e., $C_L - C_G < 0$, the following expression needs to be fulfilled.

$$\sin A \cdot \sin\Delta\phi = \sin(-4\pi dn_1/\lambda) \cdot \sin(\Delta\phi) > 0$$

The range of $\Delta\phi$ fulfilling the above expression is $2n\pi - \pi < \Delta\phi < 2n\pi$ (n is an arbitrary integer) since where d is in the range of $\lambda k/(2n_1) < d < \lambda/(4n_1) + \lambda k/(2n_1)$ (k is an arbitrary value), sinA is negative. When d is outside the above range, $2n\pi < \Delta\phi < 2n\pi + \pi$ (n is an arbitrary integer).

Practically, it is difficult to form a very deep land or groove. The depth d of the land or groove is generally $0 < d < \lambda/(4n_1)$. In this case, when the phase difference $\Delta\phi$ is $2n\pi - \pi < \Delta\phi < 2n\pi$ (n is an arbitrary integer), the reproduction signal amplitude from the groove can be larger than the reproduction signal amplitude from the land due to the influence of the phase difference.

The phase difference $\Delta\phi$ is more preferably in the range of $0 < \Delta\phi < 0.5\pi$. This is because an excessively large $\Delta\phi$ is not preferable when actually performing optical design of selecting an optimum thickness and an optical constant of each layer of a multi-layer structure, since such a large value of $\Delta\phi$ causes a rapid change in the phase difference, and as a consequence, the optical characteristics greatly change even when there is a slight change in the thickness or the optical constant of each layer. In pursuit of a solution to this inconvenience, the present inventors produced a great number of media each having various values of $\Delta\phi$ under the same conditions. As a result, it was found that while $\Delta\phi$ is in the range of $0 < \Delta\phi < 0.5\pi$, the characteristics of the media produced under the same conditions are dispersed very little, which, in turn, easily improves the production yield.

In the above model, the width of the land and the width of the groove are substantially equal to each other so that the amount of light reflected by the land and the amount of light reflected by the groove are substantially equal to each other. The width Gw of the groove with respect to the pitch Tp is preferably $0.50\,Tp \leq Gw \leq 0.85\,Tp$, for the following reason. When the width of the groove is greater than 0.85 times the pitch, sufficient servo control cannot be performed; and when the width of the groove is smaller than 0.50 times the pitch, the amplitude of the signal is excessively small.

In summary, by performing recording only in grooves and adjusting the phase difference between the reflected light from a recorded portion and the reflected light from an unrecorded portion to be in an appropriate range, both the effect of shielding thermal interference and the effect of increasing the signal amplitude using the empty land with no information recorded, due to the effect of the phase difference, can be obtained. Thus, even when high density recording is performed, alleviation of adjacent erasing, an excellent repetition-recording characteristic, and a high C/N ratio can be all provided.

It is preferable to use a material containing at least Sb, Te or Se for the recording layer 5 since the above-mentioned range of phase difference is easily fulfilled in such a case. It is also preferable that the recording layer 5 has a thickness of equal to or greater than 3 nm and equal to or less than 20 nm since the above-mentioned range of phase difference is easily fulfilled in such a case.

According to the present invention, a calculation method is used for specifying a phase difference. Namely, the optical constant of each layer included in the optical information recording medium is actually measured using a spectrometer, an ellipsomoter or the like, and the resultant optical constant and the thickness of each layer are used to derive an expression based on the principle of conservation of optical energy for all interfaces of the multi-layer structure. By solving the resultant simultaneous equations, the reflectance and the transmittance of the entire multi-layer structure, and the phase difference between the case where the recording layer 5 is in the first state and in the second state can be found.

One exemplary method for estimating an actual phase difference is to measure signal amplitude by actual recording. This is performed as follows. Using a substrate having lands and grooves of approximately the same width, information is recorded in a land and a groove under the same conditions. A difference in the signal amplitude is then measured. It is then determined which of the recording in the land and the recording in the groove provides a more advantageous result. When the medium fulfills the above-described optimum phase difference range, the signal amplitude obtained by groove recording is larger than the signal amplitude obtained by land recording by a difference of equal to greater than 1 dB.

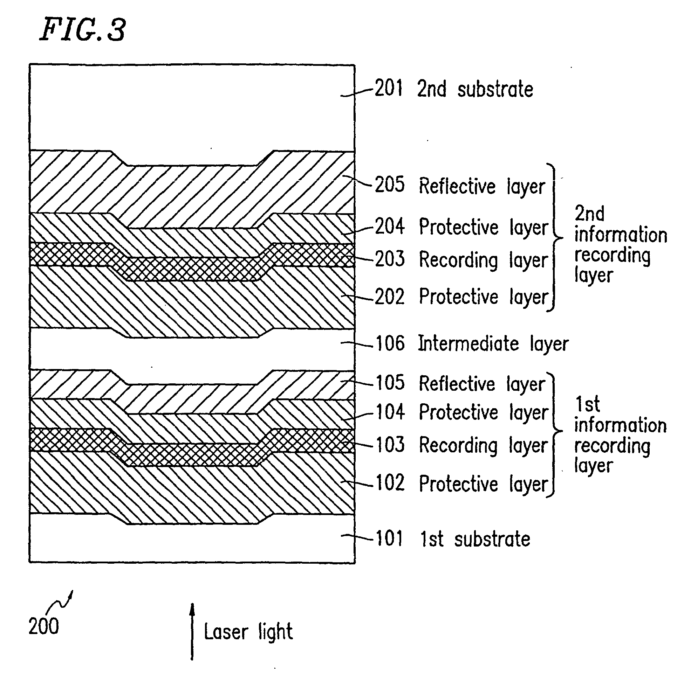

The present invention is not limited to the structure shown in Figure **1**. The interface layer **4**, the interface layer **6**, or the interfaces layers **4** and **6** may be eliminated. Alternatively, the reflective layer **8** may include two reflective sub layers, or another reflective layer may be provided on the opposite side to the laser light incident side of the reflective layer **8**. Still alternatively, as shown in Figure **3**, a structure **200** including two or more information recording layers between the first substrate and the second substrate is usable. This structure is especially preferable since this structure results in further capacity improvement of the medium. In Figure **3**, reference numerals **101** and **201** respectively represent a first substrate and a second substrate, reference numerals **103** and **203** represent recording layers, reference numerals **102, 104, 202** and **204** represent protective layers, and reference numerals **105** and **205** represent reflective layers. Reference numeral **106** represents a light-transmissive intermediate layer provided for optically separating the first information recording layer from the second information recording layer.

The thickness of the intermediate layer **106** should be sufficiently large so as to separate the first and second information recording layers and be within such a thickness range that light incident on the two information recording layers is collected by an objective lens. The first information recording layer, which is provided on the side which receives incident laser light, needs to be light-transmissive in order to realize recording on and reproduction from the second information recording layer. Therefore, the recording layer **103** and the reflective layer 105 are preferably relatively thin. The second information recording layer performs recording using light which has passed through the first information recording layer, and thus is preferably designed to have a high recording sensitivity. Figure **3** shows an example including two recording layers, but more than two information recording layers may be included. The present invention is applicable to various other structures.

Next, a method for producing an optical information recording medium according to the present invention will be described. A multi-layer structure included in the above-described optical information recording medium can be produced by using sputtering, vacuum deposition, CVD and the like. Here, as one example, a method using sputtering will be described.

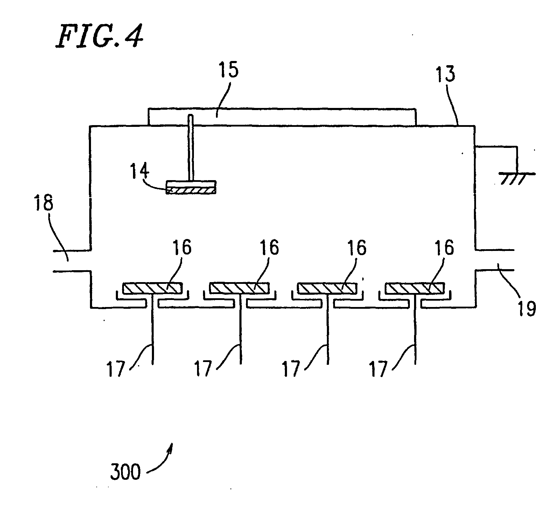

Figure **4** is a schematic view of a layer formation apparatus **300** used for producing an optical information recording medium according to the present invention. The layer formation apparatus **300** has the following structure. A vacuum container **13** is connected to a vacuum pump (not shown) via a discharge port **19**, so that the inside of the vacuum container can be kept at a high vacuum. From a gas supply port **18,** noble gas, nitrogen, oxygen or a mixing gas thereof having a certain flow rate can be supplied. Reference numeral **14** represents a second substrate or a first substrate, which is attached to a driving apparatus **15** used for rotating and revolving the substrate. Reference numeral **16** represents a sputtering target, which is connected to a negative electrode **17.** The negative electrode **17** is connected to a DC power source or a high frequency power source (not shown) via a switch. By grounding the vacuum container **13**, the polarity of the vacuum container **13** and the substrate **14** is kept positive.

As layer forming gas, noble gas or a mixing gas containing noble gas and trace amounts of nitrogen, oxygen or the like when necessary can be used. As the noble gas, Ar, Kr or the like is usable.

For forming the recording layer 5 and the protective layers **3** and **7**, a mixing gas containing noble gas and trace amounts of nitrogen or oxygen may be used. Use of such a mixing gas further reduces the thermal conductivity of each formed layer and thus more effectively reduces adjacent erasing. Using such a mixing gas has another advantage of restricting the migration of substances while recording is performed on the medium in repetition, and thus improving the repetitive-recording characteristic.

When forming the interface layers **4** and **6** mainly of a nitride, an oxide, or an nitride-oxide, reactive sputtering results in satisfactory layers. For example, when Ge-Cr-N is used for an interface layer, it is preferable to use a material containing at least Ge and Cr as a target and to use a mixing gas of noble gas and nitrogen as a layer formation gas, so as to obtain a satisfactory layer. A mixing gas containing noble gas and gas having nitrogen atoms such as $N_2O$, $NO_2$, NO, $N_2$ or the like, or a mixing gas containing noble gas and gas having any combination of the nitrogen atoms may be used. As a material for the interface layer, C and Ge-Si-N, for example, are suitable.

For forming the reflective layer **8**, noble gas such as Ar, Kr or the like is preferably used.

The layers are preferably formed as follows. The second substrate **2** is used as the layer represented by reference numeral **14** in Figure **4**, and the layers are sequentially formed from the reflective layer **8** to the protective layer **3**. The reason is that the second substrate **2** is thicker and more rigid than the first substrate **1** and thus is less susceptible to the influence of heat generated by layer formation. The first substrate **1** may be assembled with the second substrate **2** by (i) bringing together the medium including layers from the reflective layer **8** to the protective layer **3** and a substrate having one surface supplied with an adhesive resin, (ii) bringing together the medium including layers from the reflective layer **8** to the protective layer **3** and a sheet-like substrate with an ultraviolet-curable resin, or (iii) performing spin-coating with a transparent resin such as an ultraviolet-curable resin to a prescribed thickness.

The layers can be formed from the protective layer **3** in the opposite direction to that described above. In this case, however, the first substrate **1** needs to have a sufficient rigidity to withstand the heat provided for layer formation. The first substrate **1** also needs to have a guide groove. For these purposes, the first substrate **1** preferably has a certain thickness or greater (for example, 0.2 to 0.4 mm). The guide groove in the first substrate **1** is preferably formed by molding from a viewpoint of mass-productivity. When the first substrate **1** is relatively thin (for example, equal to or less than 0.2 mm), however, it is difficult to form a desired guide groove in the first substrate **1** by molding. In such a case, it is preferable to form a guide groove in the second substrate **2** and form the subsequent layers from the second substrate **2**.

The medium produced in the above-described manner is generally subjected to energy irradiation such as intense laser light irradiation or the like in order to place the recording layer **5** into a crystalline state. Thus, information can be easily rewritten even from the first time information is rewritten. For omitting the crystallization process, it is effective, for example, to use a material which is easily crystallized for the recording layer **5**, so that immediately after formation, the recording layer **5** is in a crystalline state, or to form a thin layer of a recording material which can be crystallized before the recording layer **5** is formed.

Next, an exemplary method for recording information on and reproducing information from an optical information recording medium according to the present invention will be described.

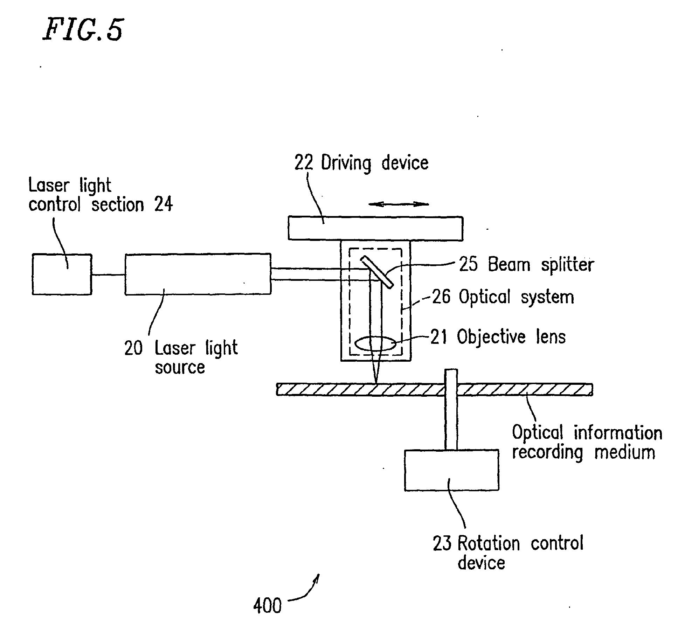

Figure **5** is a schematic view of a recording and reproduction apparatus **400** for an optical information recording medium according to the present invention. The recording and reproduction apparatus **400** includes a laser light source **20** for emitting laser light, an optical system **26** for collecting the laser light emitted by the laser light-source on an optical information recording medium, and a laser light control section **24** for controlling the laser light source. The optical system **26** includes an objective lens **21** and a beam splitter **25**. Information represented by a signal is recorded on the optical information recording medium, and reproduced and erased from the optical information recording medium are performed using the following elements: an optical head (not shown) having the laser light source **20** and the objective lens **21** mounted thereon, a driving device **22** for guiding the laser light to a prescribed irradiation position, a tracking control device (not shown) and a focusing control device (not shown) for controlling the tracking direction and the position of the light in a direction perpendicular to the surface of the optical information recording medium respectively, a laser light control section **24** for controlling laser power, and a rotation control device **23** for rotating the optical information recording medium.

First, a method for recording signal information on, erasing signal information from, or rewriting signal information on the optical information recording medium will be described. The optical information recording medium is rotated by the rotation control device **23**, and the laser light is collected by the optical system **26** to form a small spot so that the optical information recording medium is irradiated with laser light. In the following description, $P_1$ is the power level of the laser light which can reversibly change a local portion of the recording layer of the optical information recording medium from a second state (for example, a crystalline state) to a first state (for example, an amorphous state), and $P_2$ is the power level of the laser light which can reversibly change a local portion of the recording layer of the optical information recording medium from the first state (for example, an amorphous state) to the second state (for example, a crystalline state). By modulating the power level of the laser light between $P_1$ and $P_2$, a recording mark or a non-recording portion can be formed. Thus, recording, erasing and rewriting of information can be performed. The portion area irradiated with the laser light having a power level of $P_1$ is usually a string of pulse-like areas, i.e., so-called multi-pulse.

Next, a method for reproducing information will be described. The optical information recording medium is irradiated with laser light of the power level of $P_3$. $P_3$ does not change the optical characteristics (for example, the reflectance) of the optical information recording medium, but provides a sufficient amount of reflected light for reproducing the recorded information. $P_3$ is lower than $P_1$ and also $P_2$. When the optical information recording medium is irradiated with laser light having the power level of $P_3$, the laser light is reflected by the optical information recording medium. The reflected light is read by a detector. Thus, information is reproduced.

Information is recorded only in the grooves of the optical information recording medium. The reason is that the effect of reducing adjacent erasing and the effect of improving the repetitive-recording characteristic can be both obtained when recording is performed only in the grooves, as described above.

When the lands are irradiated with laser light for reproduction, the condition of $2n\pi - \pi < \phi_1 - \phi_2 < 2n\pi$ (n is an arbitrary integer) is fulfilled. $\phi_1$ is the phase of the light reflected by a portion of a land which is in the first state (for example, in an amorphous state having a low reflectance) and $\phi_2$ is the phase of the light reflected by a portion of the land which is in the second state (for example, in a crystalline state having a high reflectance). Thus, even when information is recorded only in a groove, it becomes possible to increase the signal amplitude by the interference of the phase difference between a groove having a recording mark written therein and an adjacent land. As a result, a high C/N ratio is obtained.

For the above-described reason, the track pitch is preferably equal to or less than 0.40 μm, and more preferably equal to or less than 0.33 μm.

Where the width of a formed recording mark is w and the pitch of the grooves is Tp, the relationship of Tp/4 < w < Tp/2 is preferably fulfilled, for the following reasons. When the mark width w is equal to or less than Tp/4, it is difficult to obtain a large signal amplitude. When w is equal to or greater than Tp/2, recording is also performed in the outside of the intended groove. Therefore, in the case where the above-mentioned relationship is not fulfilled, even when recording is intended to be performed only in the grooves, the problem of adjacent erasing occurs.

The thickness of the first substrate is equal to or less than 0.4 mm, and thickness of the second substrate is equal to or greater than 0.4 mm. The numerical aperture (NA) for the laser light is preferably equal to or greater than 0.70. With such conditions, the effects of the present invention are more noticeably provided since higher density recording is possible.

The wavelength of the laser light is preferably equal to or less than 450 nm. It is possible to record data on the optical information recording medium according to the present invention using laser light having a wavelength of greater than 450 nm. With a high density recording medium such as an optical information recording medium according to the present invention, however, a greater effect is obtained by using laser light having a shorter wavelength. In other words, it is not preferable to perform high density recording on an optical recording medium allowing high density recording, using laser light having a wavelength of equal to or greater than 450 nm. The reason is that such a manner of recording causes the problems of deterioration in adjacent erasing and reduction in repetitive-recording characteristic.

One example of laser light having a wavelength in the range of equal to or less than 450 nm is GaN-based semiconductor laser light which has been actively developed recently. The GaN-based semiconductor laser light has a wavelength of about 400 nm. Use of less expensive laser light will be allowed when the laser is more developed.

Hereinafter, the present invention will be described in more detail by way of specific examples.

(Example 1)

An optical information recording medium having the layer structure shown in Figure **1** was produced. The first substrate **1** and the second substrate **2** were each formed of a polycarbonate resin disc having a diameter of 120 mm. The first substrate **1** had a thickness of 0.1 mm, and the second substrate **2** had a thickness of 1.1 mm. The protective layers **3** and **7** were both formed of a material containing ZnS and 20 mol% of $SiO_2$. The interface layers **4** and **6** were formed of GeCrN. The recording layer **5** was formed of $Ge_{29}Sb_{15}Te_{54}N_2$. The reflective layer **8** was formed of an AgPdCu alloy. The protective layers **3** and **7** had a thickness of 70 nm and a thickness of 11 nm respectively. The interface layers **4** and **6** each had a thickness of 5 nm. The recording layer **5** had a thickness of 12 nm. The reflective layer **8** had a thickness of 80 nm. The phase difference between a recorded portion and an unrecorded portion was obtained by optical calculation. The difference between the phase $\phi_1$ of the light from the low reflection state and the phase $\phi_2$ of the light from the high reflection state, i.e., $\phi_1 - \phi_2$, was -0.17π.

The guide groove for laser light was formed in the second substrate **2**. The depth of the guide groove was 35 nm, and the track pitch was 0.37 μm.

The recording layer **5** was produced by supplying a mixing gas containing Ar and 2.5% of nitrogen so that the total pressure would be 0.13 Pa, and then by supplying the negative electrode with a power of DC1.27 W/$cm^2$. The protective layers **3** and **7** were produced by supplying a mixing gas containing Ar and 1.0% of oxygen so that the total pressure would be 0.13 Pa and supplying the negative electrode with a power of RF5.10 W/$cm^2$. The reflective layer **8** was produced by supplying Ar gas so that the total pressure would be 0.26 Pa and supplying a power of DC4.45 W/$cm^2$. The interface layers **4** and **6** were each produced using GeCr as a target and a mixing gas of Ar and nitrogen as sputtering gas. The sputtering gas pressure was 1.33 Pa, the nitrogen pressure in the sputtering gas was 40%, and the sputtering power density was RF6.37 W/$cm^2$. A medium produced by the above-described method will be referred to as medium (1).

For evaluating the disc characteristics, laser light was used which had a wavelength of 405 nm and passed through an objective lens having a numerical aperture of 0.85. The shortest mark length was set to be 0.185 μm, and the disc rotation speed was set to be a linear speed of 5.0 m/s. The characteristics of the disc were evaluated regarding the C/N ratio of the signal, the adjacent erasing characteristic, and the repetitive-recording characteristic. The C/N ratio was evaluated by recording a 3T mark (mark length: 0.185 μm) in a groove with an appropriate laser power using a (8-16) modulation system and then measuring the C/N ratio of the signal obtained from the 3T mark. Adjacent erasing was evaluated as follows. Ten 3T marks were recorded in the track of a groove with an appropriate laser power, and the signal amplitude corresponding to the 3T mark was measured. Then, fifty 3T marks and fifty 11T marks were recorded alternately (100 marks in total) in the tracks of two grooves adjacent to the first groove. The disc was then scanned by laser light for erasing, so as to erase all marks in the tracks of the two grooves. Then, the signal amplitude corresponding to the 3T mark in the track of the first, intermediate groove was again measured. The difference between the signal amplitude before and the signal amplitude after the erasing operation (i.e., reduction in the signal amplitude by the erasing operation) was obtained as an amount of adjacent erasing. The repetitive-recording characteristic was evaluated as follows. First, 3T marks were recorded under similar conditions to those for evaluating the C/N ratio. Then, the 3T marks were erased with 11T marks, and the erasing ratio was measured. The 3T marks were recorded and erased with 11T marks repetitively, and the erasing ratio was measured each time. The number of recording cycles, in which an erasing ratio of equal to or greater than 20 dB was obtained, was set as a repetition-recording number. In the evaluation of the repetitive-recording characteristic, an operation of recording one 3T mark or one 11T mark was counted as one cycle of operation.

As a comparative example, a medium having an identical structure to that of medium (1) except that the track pitch was twice that of medium (1) as shown in Figure **2(a)** was produced. This medium will be referred to as medium (2). The disc characteristics of medium (2) were evaluated regarding the C/N ratio of the signal, the adjacent erasing characteristic, and the repetitive-recording characteristic. The C/N ratio and the repetitive-recording characteristic were evaluated in a similar manner to medium (1). Adjacent erasing was evaluated as follows. Ten 3T marks were recorded in the track of a groove with an appropriate laser power, and the signal amplitude corresponding to the 3T mark was measured. Then, fifty 3T marks and fifty 11T marks were recorded alternately (100 marks in total) in the tracks of two lands adjacent to the groove. The disc was then scanned by laser light for erasing, so as to erase all marks in the tracks of the two lands. Then, the signal amplitude corresponding to the 3T mark in the track of the intermediate groove was again measured. The difference between the signal amplitude before and the signal amplitude after the erasing operation (i.e., reduction in the signal amplitude by the erasing operation) was obtained as an amount of adjacent erasing. Namely, signals were recorded such that medium (1) and medium (2) had an equal recording capacity. Regarding medium (2), the evaluation was performed, in a manner similar to the above, also in the case where the lands and the grooves were exchanged with each other.

As another comparative example, a medium having an identical structure to that of medium (1) except that information was recorded only in lands was produced. This medium will be referred to as medium (3). Table 1 shows the evaluation results of medium (1), medium (2) and medium (3).

Table 1

| Medium number | Recording system | | C/N ratio | Adjacent erasing | Repetitive recording |
|---|---|---|---|---|---|
| (1) | Groove recording | | ○ | ○ | ○ |
| (2) | Land-groove recording | Groove | ○ | X | ○ |
| | | Land | Δ | X | Δ |
| (3) | Land recording | | Δ | ◎ | Δ |

The results in Table 1 are shown as follows. For the C/N ratio, ○ means greater than or equal to 50 dB, Δ means greater than or equal to 48 dB and less than 50 dB, and X means less than 48 dB. Adjacent erasing was evaluated in terms of reduction in the signal amplitude. ◎ means 0 dB, ○ means greater than 0 dB and less than or equal to 2 dB, and X means greater than 2 dB. The repetitive-recording characteristic was evaluated in terms of the number of repetitive cycles in which recording was possible. ○ means equal to or greater than 10,000 cycles, Δ means equal to or greater than 5,000 times and less than 10,000 times, and X means less than 5,000 times.

According to Table 1, medium (1) provides a high C/N ratio, a satisfactory adjacent erasing characteristic, and a satisfactory repetitive-recording characteristic at the same time. The satisfactory adjacent erasing characteristic is considered to be provided because since recording is performed only in the grooves, which are never directly adjacent to each other, heat is shielded in a good manner. The high C/N ratio is considered to be provided since the optical information recording medium of the present invention adopts a layer structure which is advantageous to groove recording. The satisfactory repetitive-recording characteristic is considered to be provided since heat is diffused at a higher speed in the grooves than in the lands.

Medium (2) is satisfactory in the C/N ratio and the repetitive-recording characteristic in the grooves, but is not satisfactory in the C/N ratio or the repetitive-recording characteristic in the lands. Adjacent erasing occurs in both the grooves and the lands.

Medium (3) in which recording is performed only in the lands is superior to medium (1) in the effect of reducing adjacent erasing, but is not very good in the C/N ratio or the repetitive-recording characteristic. A conceivable reason is that the optical information recording medium of the present invention adopts a layer structure which is advantageous to groove recording.

It is appreciated from the above that a high C/N ratio, a satisfactory adjacent erasing characteristic, and a satisfactory repetitive-recording characteristic can be achieved at the same time by adopting a layer structure which is advantageous to groove recording and performing recording only in the grooves.

(Example 2)

In another example of the present invention, media (4), (5), (6), (7), (8), (9), (10) and (11) having the same structure as that of medium (1) except that the thickness of the recording layer 5 was respectively 3.0 nm, 5.0 nm, 8.0 nm, 10.0 nm, 12.0 nm, 15.0 nm, 17.0 nm and 20.0 nm. The phase difference of each of these media was calculated in a similar manner to that of medium (1). The disc characteristics were evaluated in a similar manner to medium (1). The results are shown in Table 2.

Table 2

| Medium number | Recording layer thickness (nm) | Calculated phase difference (rad) | C/N ratio | Adjacent erasing | Repetitive recording |
|---|---|---|---|---|---|
| (4) | 3.0 | $0.20\pi$ | $\Delta$ | ◎ | ○ |
| (5) | 5.0 | $0.11\pi$ | $\Delta$ | ◎ | ○ |
| (6) | 8.0 | $0.06\pi$ | $\Delta$ | ◎ | ○ |
| (7) | 10.0 | $-0.10\pi$ | ○ | ◎ | ○ |
| (8) | 12.0 | $-0.17\pi$ | ○ | ○ | ○ |
| (9) | 15.0 | $-0.23\pi$ | ○ | ○ | ○ |
| (10) | 17.0 | $-0.27\pi$ | ○ | ○ | ○ |
| (11) | 20.0 | $-0.30\pi$ | ○ | ○ | ○ |

According to Table 2, media (7) through (11) are satisfactory both in the C/N ratio and the adjacent erasing characteristic as with medium (1). This is due to the phase differences of these media fulfilling the range of $-\pi$ to $-0.10\pi$, which is advantageous to groove recording. Media (4), (5) and (6), having phase differences out of the above-mentioned range, do not provide a high C/N ratio in the grooves. However, media (4), (5) and (6) provide excellent adjacent erasing characteristic when the recording layer 5 is relatively thin (equal to or less than 10.0 nm) since heat is diffused at a lower speed in the face of the recording layer.

Even when the thickness of the recording layer 5 is less than 8.0 nm, the phase difference can be within the range of $-\pi$ to $-0.10\pi$ by adjusting the thickness of each of the protective layers **3** and **7.** Further, the phase difference can be within a more precise range of, for example, $-0.50\pi$ to $-0.10\pi$. Especially when the protective layer **3** is relatively thick, the above-mentioned range can be fulfilled easily. Such media are slightly inferior to the media including a recording layer having a thickness of equal to or greater than 10.0 nm in terms of the C/N ratio, but can provide an excellent adjacent erasing characteristic. Therefore, these media can be adopted.

INDUSTRIAL APPLICABILITY

As described above, the present invention provides an optical information recording medium including a first substrate; a second substrate; and a recording layer formed between the first substrate and the second substrate. The optical information recording medium includes lands and grooves, and a distance between a light source of laser light irradiating the optical information recording medium and the lands is larger than a distance between the light source and the grooves. A difference D between the distance from the light source of the laser light to the lands and the distance from the light source of the laser light to the grooves is in the range of $0 < D < \lambda/(4N)$ (N is a refractive index of the substrate), where $\lambda$ is the wavelength of the laser light. The grooves are formed in the optical information recording medium at a pitch of less than or equal to 0.40 $\mu$m. Each groove is either in a first state having a first reflectance or in a second state having a second reflectance lower than the first reflectance, and the first state and the second state are reversibly changeable by the irradiation of the laser light. When a groove is irradiated with laser light for reproduction, $\phi_1 - \phi_2$, which is a difference between $\phi_1$ and $\phi_2$, fulfills $2n\pi - \pi < \phi_1 - \phi_2 < 2n\pi$ (n is an arbitrary integer) where $\phi_1$ is a phase of light reflected by a portion of the groove which is in the first state and $\phi_2$ is a phase of light reflected by a portion of the groove which is in a second state. Due to the above-described structure, the optical information recording medium prevents adjacent erasing and provides a high repetitive-recording characteristic and a sufficient C/N ratio even when high density recording is performed. A method for performing information recording, erasing and reproduction using such an optical information recording medium; and an apparatus for performing information recording on, erasing from and reproduction from such optical information recording medium are also provided.

**Claims**

1. An optical information recording medium, comprising:

   a first substrate; a second substrate; and a recording layer formed between the first substrate and the second substrate, wherein:

   the optical information recording medium includes lands and grooves, and a distance between a light source of laser light irradiating the optical information recording medium and the lands is larger than a distance between the light source and the grooves,
   a difference D between the distance from the light source of the laser light to the lands and the distance from the light source of the laser light to the grooves is in the range of $0 < D < \lambda/(4N)$ (N is a refractive index of the substrate), where $\lambda$ is the wavelength of the laser light,
   the grooves are formed in the optical information recording medium at a pitch of less than or equal to 0.40 $\mu$m,
   each groove is either in a first state having a first reflectance or in a second state having a second reflectance lower than the first reflectance, and the first state and the second state are reversibly changeable by the irradiation of the laser light, and
   when a groove is irradiated with laser light for reproduction, $\phi_1 - \phi_2$, which is a difference between $\phi_1$ and $\phi_2$, fulfills $2n\pi - \pi < \phi_1 - \phi_2 < 2n\pi$ (n is an arbitrary integer) where $\phi_1$ is a phase of light reflected by a portion of the groove which is in the first state and $\phi_2$ is a phase of light reflected by a portion of the groove which is in the second state.

2. An optical information recording medium according to claim 1, wherein when a groove is irradiated with the laser light for reproduction, $\phi_1 - \phi_2$, which is a difference between $\phi_1$ and $\phi_2$, fulfills $2n\pi - \pi < \phi_1 - \phi_2 < 2n\pi - 0.1\pi$ (n is an arbitrary integer) where $\phi_1$ is a phase of light reflected by a portion of the groove which is in the first state and $\phi_2$ is a phase of light reflected by a portion of the groove which is in the second state.

3. An optical information recording medium according to claim 1, wherein when a groove is irradiated with the laser light for reproduction, $\phi_1 - \phi_2$, which is a difference between $\phi_1$ and $\phi_2$, fulfills $2n\pi - 0.5\pi < \phi_1 - \phi_2 < 2n\pi - 0.1\pi$ (n is an arbitrary integer) where $\phi_1$ is a phase of light reflected by a portion of the groove which is in the first state and $\phi_2$ is a phase of light reflected by a portion of the groove which is in the second state.

4. An optical information recording medium according to claim 1, wherein the first substrate has a thickness of greater than or equal to 0.01 mm and less than or equal to 0.4 mm, and the second substrate has a thickness of greater than or equal to 0.4 mm.

5. An optical information recording medium according to claim 1, wherein the recording layer has a thickness greater than or equal to 3 nm and less than or equal to 20 nm.

6. An optical information recording medium according to claim 1, further comprising a guide groove for the laser light in a surface of at least one of the first substrate and the second substrate facing the recording layer, and the guide groove has a depth $d_2$ fulfilling $\lambda/20n_1 \leq d_2 \leq \lambda/8n_1$, where $\lambda$ is a wavelength of the laser light and $n_1$ is a refractive index of the substrate on which the laser light is incident first.

7. An optical information recording medium according to claim 1, wherein the recording layer includes at least one of Sb, Te and Se.

8. An optical information recording medium according to claim 1, wherein at least two recording layers are included.

9. An optical information recording medium according to claim 6, wherein the guide grooves are formed at a pitch of less than or equal to 0.40 $\mu$m.

10. An optical information recording medium according to claim 1, which fulfills $Tp/4 < w < Tp/2$ where w is a width of a recording mark formed on the grooves by the irradiation of the laser light and Tp is the pitch of the grooves.

11. An optical information recording medium according to claim 1, which fulfills 0.50 Tp ≤ Gw ≤ 0.85 Tp where Tp is the pitch and Gw is a width of the grooves.

12. A method for recording information on, and erasing and reproducing information from an optical information recording medium comprising a first substrate; a second substrate; and a recording layer formed between the first substrate and the second substrate,

wherein:

the optical information recording medium includes lands and grooves, and a distance between a light source of laser light irradiating the optical information recording medium and the lands is larger than a distance between the light source and the grooves,

a difference D between the distance from the light source of the laser light to the lands and the distance from the light source of the laser light to the grooves is in the range of $0 < D < \lambda/(4N)$ (N is a refractive index of the substrate), where $\lambda$ is the wavelength of the laser light,

the grooves are formed in the optical information recording medium at a pitch of less than or equal to 0.40 $\mu$m, each groove is either in a first state having a first reflectance or in a second state having a second reflectance lower than the first reflectance, and the first state and the second state are reversibly changeable by the irradiation of the laser light, and

when a groove is irradiated with laser light for reproduction, $\phi_1 - \phi_2$, which is a difference between $\phi_1$ and $\phi_2$, fulfills $2n\pi - \pi < \phi_1 - \phi_2 < 2n\pi$ (n is an arbitrary integer) where $\phi_1$ is a phase of light reflected by a portion of the groove which is in the first state and $\phi_2$ is a phase of light reflected by a portion of the groove which is in the second state,

the method comprising the steps of:

modulating a power level of the laser light between $P_1$ and $P_2$ to record the information in the groove or erase the information from the groove; and

irradiating the groove with laser light for reproduction having a power level of $P_3$ to reproduce information recorded in the groove,

wherein:

$P_1$ is a power level of the laser light which can change the groove from the second state to the first state by the irradiation of the laser light, $P_2$ is a power level of the laser light which can change the groove from the first state to the second state by the irradiation of the laser light, and $P_3$ is power level of the laser light which does not change the reflectance of the groove but provides a sufficient amount of reflected light for reproducing the recorded information by the irradiation of the laser light, $P_3$ being lower than $P_1$ and $P_2$.

13. A method for recording information on, and erasing and reproducing information from an optical information recording medium according to claim 12, wherein the first substrate has a thickness of less than or equal to 0.4 mm, the second substrate has a thickness of greater than or equal to 0.4 mm, and the laser light is obtained by a numerical aperture of greater than or equal to 0.70.

14. A method for recording information on, and erasing and reproducing information from an optical information recording medium according to claim 12, wherein the laser light has a wavelength of less than or equal to 450 nm.

15. An apparatus for recording information on, and erasing and reproducing information from an optical information recording medium, the apparatus comprising: a light source for emitting laser light; an optical system for collecting the laser light emitted by the laser light source on the optical information recording medium; and a laser light control section for controlling the laser light source,

wherein:

the optical information recording medium includes a first substrate; a second substrate; and a recording layer formed between the first substrate and the second substrate,

the optical information recording medium includes lands and grooves, and a distance between a light source of laser light irradiating the optical information recording medium and the lands is larger than a distance between the light source and the grooves,

a difference D between the distance from the light source of the laser light to the lands and the distance from the light source of the laser light to the grooves is in the range of $0 < D < \lambda/(4N)$ (N is a refractive index of the substrate), where $\lambda$ is the wavelength of the laser light,

the grooves are formed in the optical information recording medium at a pitch of less than or equal to 0.40 $\mu$m, each groove is either in a first state having a first reflectance or in a second state having a second reflectance lower than the first reflectance, and the first state and the second state are reversibly changeable by the irradiation of the laser light, and

when a groove is irradiated with laser light for reproduction, $\phi_1 - \phi_2$, which is a difference between $\phi_1$ and $\phi_2$, fulfills $2n\pi - \pi < \phi_1 - \phi_2 < 2n\pi$ (n is an arbitrary integer) where $\phi_1$ is a phase of light reflected by a portion of the groove which is in the first state and $\phi_2$ is a phase of light reflected by a portion of the groove which is in the second state,

wherein:

for recording or erasing the information, the laser control section controls the laser light source so as to modulate a power level of the laser light collected on the optical information recording medium by the optical system between $P_1$ and $P_2$,

for reproducing the information, the laser control section controls the laser light source so that a power level of the laser light collected on the optical information recording medium by the optical system is $P_3$, and

$P_1$ is a power level of the laser light which can change the groove from the second state to the first state by the irradiation of the laser light, $P_2$ is a power level of the laser light which can change the groove from the first state to the second state by the irradiation of the laser light, and $P_3$ is power level of the laser light which does not change the reflectance of the groove but provides a sufficient amount of reflected light for reproducing the recorded information by the irradiation of the laser light, $P_3$ being lower than $P_1$ and $P_2$.

16. An apparatus for recording information on, and erasing and reproducing information from an optical information recording medium according to claim 15, wherein the first substrate has a thickness of less than or equal to 0.4 mm, the second substrate has a thickness of greater than or equal to 0.4 mm, and the laser light is obtained by a numerical aperture of greater than or equal to 0.70.

17. An apparatus for recording information on, and erasing and reproducing information from an optical information recording medium according to claim 15, wherein the laser light has a wavelength of less than or equal to 450 nm.

*FIG.1*

2 2nd substrate

$d_2$

8 Reflective layer
7 Protective layer
6 Interface layer
5 Recording layer
4 Interface layer

3 Protective layer

1 1st substrate

100

Laser light

FIG.2

(a)

10 Recording mark

11 Land

Laser light

12 Groove

(b)

Groove 12

Recording mark 10

Land 11

Laser light

## FIG.3

— 201 2nd substrate

— 205 Reflective layer ⎫
— 204 Protective layer ⎪ 2nd information recording layer
— 203 Recording layer ⎬
— 202 Protective layer ⎭

— 106 Intermediate layer

— 105 Reflective layer ⎫
— 104 Protective layer ⎪ 1st information recording layer
— 103 Recording layer ⎬
— 102 Protective layer ⎭

— 101 1st substrate

200

↑ Laser light

*FIG.4*

## FIG.5

Laser light
control section 24

22 Driving device

25 Beam splitter

26 Optical system

21 Objective lens

20 Laser light
source

Optical information
recording medium

23 Rotation control
device

400

## INTERNATIONAL SEARCH REPORT

| | International application No. |
|---|---|
| | PCT/JP01/08326 |

A. CLASSIFICATION OF SUBJECT MATTER
    Int.Cl⁷   G11B7/00-7/013, 7/24

According to International Patent Classification (IPC) or to both national classification and IPC

B. FIELDS SEARCHED

Minimum documentation searched (classification system followed by classification symbols)
    Int.Cl⁷   G11B7/00-7/013, 7/24

Documentation searched other than minimum documentation to the extent that such documents are included in the fields searched
Jitsuyo Shinan Koho          1926-1996     Jitsuyo Shinan Toroku Koho   1996-2001
Kokai Jitsuyo Shinan Koho    1971-2001     Toroku Jitsuyo Shinan Koho   1994-2001

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 8-83426 A (Matsushita Electric Ind. Co., Ltd.), 26 March, 1996 (26.03.96), Full text (Family: none) | 1-17 |
| Y | EP 880131 A (Sony Corporation), 25 November, 1998 (25.11.98), column 39, lines 28 to 38; column 58, line 47 to column 59, line 35 & JP 10-320775 A (Sony Corporation), Par. Nos. [0156], [0207] to [0209] | 1-17 |

☐ Further documents are listed in the continuation of Box C.      ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier document but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 13 December, 2001 (13.12.01) | 25 December, 2001 (25.12.01) |

| Name and mailing address of the ISA/ | Authorized officer |
|---|---|
| Japanese Patent Office | |
| Facsimile No. | Telephone No. |

Form PCT/ISA/210 (second sheet) (July 1992)

24